# EUROPÄISCHE PATENTANMELDUNG

(11) **EP 0 608 861 A2**
(43) Veröffentlichungstag der Anmeldung: **03.08.1994**
(21) Anmeldenummer: 94101129.8
(22) Anmeldetag: 26.01.1994
(51) Int. Cl.: B65G 47/31, B65B 35/24

(54) **Verfahren und Einrichtung zum Zuführen empfindlicher Gegenstände zu einer Verarbeitungsmaschine**

(30) Priorität: 29.01.1993 DE 4302575
(71) Anmelder: Pactec Verpackungsmaschinen-Fabrik Theegarten GmbH & Co. KG, 01237 Dresden (DE)
(72) Erfinder: Hauptmann, Gerd, D-01731 Gombsen (DE); Herzog, Jürgen, D-01069 Dresden (DE); Perner, Stefan, D-01277 Dresden (DE); Vogel, Holger, D-01159 Dresden (DE); Eberhard, Stephan, D-01277 Dresden (DE)
(74) Vertreter: Grünecker, Kinkeldey, Stockmair & Schwanhäusser Anwaltssozietät

(57) **Zusammenfassung**

Die Erfindung betrifft ein Verfahren und eine Einrichtung zum Zuführen empfindlicher Gegenstände zu einer Verarbeitungsmaschine. Zur Vermeidung bzw. möglichsten Herabsetzung dynamischer Belastungen bei der Zuführung kleiner, druckempfindlicher Gegenstände, wie z.B. weichem Konfekt, zu einer Verarbeitungsmaschine, insbesondere Verpackungsmaschine, ist erfindungsgemäß im Anschluß an eine Mehrzahl von Förderern ein die Gegenstände zu der Verarbeitungsmaschine zuführender Beschickungsförderer (12) vorgesehen, auf den die Gegenstände (1) unter Einsatz eines Mitnehmerförderers (10) aufgegeben werden, wobei die Mitnehmer (11) des Mitnehmerförderers (10) zwischen die vorher vereinzelten Gegenstände (1) derart eingreifen, daß unter Steuerung der Fördergeschwindigkeit der Gegenstände (1) und der Umlaufgeschwindigkeit des Mitnehmerförderers die Gegenstände zur Anlage an die Mitnehmer (11) des Mitnehmerförderers (10) gelangen, so daß die Gegenstände (1) mit hoher Lagepräzision auch bei hohen Arbeitsgeschwindigkeiten an den abschließenden Beschickungsförderer (12) übergeben werden.

## Beschreibung

Die Erfindung betrifft ein Verfahren zum Zuführen empfindlicher Gegenstände, insbesondere Süßwaren, zu einer Verarbeitungsmaschine, insbesondere Verpackungsmaschine, mit einer maschinenseitigen Aufnehmervorrichtung, der die Gegenstände in Übereinstimmung mit einem Maschinentakt der Verarbeitungsmaschine durch eine Mehrzahl abfolgender Förderer zugeführt werden. Die Erfindung betrifft überdies eine Einrichtung zum lagegenauen Zuführen derartiger Gegenstände entsprechend einem Maschinentakt der Verarbeitungsmaschine mit zumindest einer, die Gegenstände einbahnig und vereinzelt fördernden Fördereinrichtung und einem stromab derselben angeordneten Beschickungsförderer, der ein Umlauffördermittel und an diesem fixierte Mitnehmer zur Beschickungsförderung der Gegenstände entlang Führungsbahnen zu der Verarbeitungsmaschine aufweist, unter Anlage der Gegenstände an den Mitnehmern des Beschickungsförderers.

Ein Verfahren und eine Einrichtung der vorgenannten Art sind aus der DE-OS 33 39 793 bekannt. Diese zeigt eine aus mehreren abfolgend angeordneten Förderbändern bestehende Zuführungseinrichtung für eine Verpackungsmaschine für Schokoladenriegel, wobei die auf einem Überwachungsband in ihrer Längsachse ausgerichteten Riegel zunächst einem Zuteilband zugeführt werden. Die Umlaufgeschwindigkeit des Zuteilbandes ist geringer als die Umlaufgeschwindigkeit des Überwachungsbandes. Dadurch tritt ein Stau der Riegel auf, wobei die Umlaufgeschwindigkeiten beider Förderbänder so geregelt und auf den Maschinentakt der Verpackungsmaschine abgestimmt werden, daß die Riegel auf das Überwachungsband zurückstauen, wobei die Staulänge kontrolliert wird.

Auf dem nachfolgenden Beschleunigungsband werden die Stücke wieder vereinzelt. Das Beschleunigungsband besteht aus zwei parallelen nebeneinander angeordneten Bändern mit gleicher Umlaufgeschwindigkeit. Zwischen den Bändern ist ein Freiraum für den Durchgriff der Mitnehmer einer teilweise unter den Bändern angeordneten Mitnehmerkette des Beschickungsförderers vorgesehen.

Die Beschleunigungsbänder laufen schneller als das Zuteilband. Dadurch bilden sich wieder Zwischenräume, in die die Mitnehmer der Mitnehmerkette des Beschickungsförderers eingreifen.

Die Mitnehmer des Beschickungsförderers laufen im Maschinentakt und haben gegenüber den Beschleunigungsbändern eine geringfügig höhere Umlaufgeschwindigkeit. Dadurch legen sich die Mitnehmer an die Hinterkante der Riegel an und es kann zu einer geringfügigen Schubbewegung auf den Beschleunigungsbändern kommen.

Bei der Übergabe von den Beschleunigungsbändern auf die Führungsschienen des nachfolgenden Beschickungsförderers liegen die Mitnehmer der Mitnehmerkette an der Hinterkante der Riegel an. Die Riegel werden auf dem Beschickungsförderer durch dessen Mitnehmer im Maschinentakt der Verpackungsmaschine zu den Arbeitsorganen derselben geführt.

Für die Steuerung der Zuführungseinrichtung ist ein Servomotor vorgesehen, der die Umlaufgeschwindigkeit des Zuteilbandes steuert. Es wird eine Basisgeschwindigkeit des Zuteilbandes eingeregelt, die stets unter der dem Maschinentakt entsprechenden Geschwindigkeit bleibt. Dazu wird durch einen Sensor die augenblickliche Lage eines Riegels bei der Übergabe vom Zuteilband auf die Beschleunigungsbänder ermittelt und der Basistakt zeitweilig so verschoben, daß eine lagegenaue Position der Riegel zu den Mitnehmern der Mitnehmerkette erreicht wird.

Die vorgenannte Zuführungseinrichtung ist allerdings insofern nachteilig, als sie für Hochleistungs-Verpackungsmaschinen, die mit sehr hohen Maschinentaktzahlen laufen, und zur Verarbeitung sehr empfindlicher Stückgüter nicht geeignet ist.

Der Grund hierfür liegt in der hohen Geschwindigkeitsdifferenz zwischen dem Zuteilband und den Beschleunigungsbändern. Durch die Beschleunigung erfahren die Riegel dynamische Belastungen, deren Folgen bis zum Zeitpunkt der Übergabe an die Verpackungsmaschine nicht vollständig abgebaut werden können. Dies spielt insbesondere bei der Verpackung sehr druckempfindlicher Stückgüter, wie z.B. Pralines, eine Rolle. Des weiteren kommt es zur Reibung der Schokoladenwaren auf dem Beschleunigungsband und damit zu weiteren dynamischen Einflüssen sowie dem Abrieb des geförderten Gutes, wodurch Verschmutzungen des Beschleunigungsbandes hervorgerufen werden.

Der Erfindung liegt daher die Aufgabe zugrunde, ein Verfahren und eine Einrichtung der eingangs genannten Art zum lagegenauen Zuführen empfindlicher Gegenstände (Stückgüter) bei hohen Verarbeitungsgeschwindigkeiten anzugeben, durch die die dynamischen Belastungen, denen die geförderten Gegenstände ausgesetzt sind, auf einem äußerst niedrigen Niveau gehalten werden können, ohne daß sich hierdurch Aufwand und Platzbedarf wesentlich erhöhen.

Hinsichtlich des Verfahrens wird diese Aufgabe bei einem Verfahren der eingangs genannten Art erfindungsgemäß dadurch gelöst, daß die Gegenstände stromauf eines mit der Aufnehmervorrichtung zusammenwirkenden Beschickungsförderers vereinzelt und unter Eingriff von Mitnehmern eines Mitnehmerförderers auf den Beschickungsförderer aufgegeben werden.

Hinsichtlich der Einrichtung der vorgenannten Art wird die obige Aufgabe erfindungsgemäß dadurch gelöst, daß zumindest teilweise oberhalb der Fördereinrichtung ein Mitnehmerförderer angeordnet ist, dessen Mitnehmer zumindest im Bereich einer Übergabe von der Fördereinrichtung zu dem Beschickungsförderer in Kontakt mit den Gegenständen sind.

Durch die erfindungsgemäße Lösung werden ein Verfahren und eine Einrichtung für Hochleistungs-Verarbeitungsmaschinen, insbesondere Verpackungsmaschinen, geschaffen, wobei diese bei hohen Geschwindigkeiten eine einbahnige und derzeit einzigartige, lagegenaue Bereitstellung der Gegenstände bei hoher Schonung durch weitgehenden Wegfall dynamischer Belastungen ermöglichen.

Durch die Erfindung können auch für derartige, druckempfindliche Stückgüter, wie z.B. Weichpralines, Verpackungsleistungen von ca. 1300 Stück/min. erreicht werden.

Bevorzugte Ausgestaltungen des erfindungsgemäßen Verfahrens und der erfindungsgemäßen Einrichtung sind in den zugehörigen Unteransprüchen dargelegt.

Die Erfindung wird nachstehend anhand eines Ausführungsbeispieles und zugehöriger Zeichnungen näher erläutert. In diesen zeigen:
- Fig. 1: eine schematische Gesamtdarstellung der Zuführungseinrichtung nach einem Ausführungsbeispiel der Erfindung,
- Fig. 2: eine stark vergrößerte Schnittdarstellung einer Übergabestelle von dem Zuteilförderer auf den Eingabeförderer, und
- Fig. 3: eine schematische Darstellung eines Teiles der gesamten Zuführungseinrichtung nach Fig. 1.

In dem nachfolgend erläuterten Ausführungsbeispiel werden als Verarbeitungsgüter (Gegenstände) Konfektstücke mit einer Länge von etwa 26 mm und relativ weicher Konsistenz verwendet.

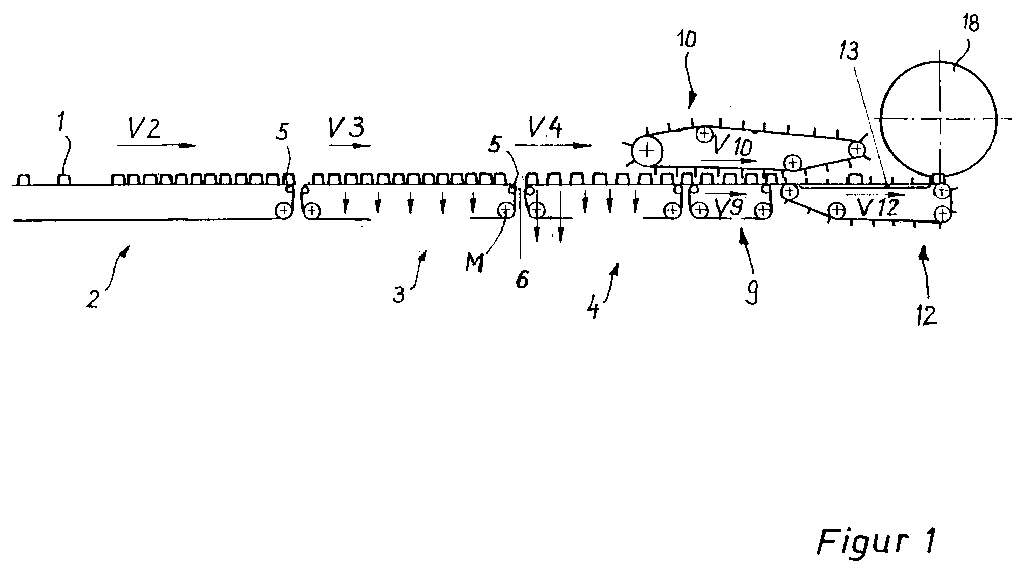

Nach der Gesamtdarstellung des Ausführungsbeispieles gemäß Fig. 1 werden durch hier nicht dargestellte Mittel die Konfektstücke 1 einbahnig ausgerichtet und über ein Stauband 2 einem Zuteilband 3 zugeführt. Dem Zuteilband 3 ist ein Servomotor M zugeordnet. Der Servomotor M dient der Steuerung der Umlaufgeschwindigkeit V3 des Zuteilbandes 3. Diese ist wesentlich geringer als die Umlaufgeschwindigkeit V2 des Staubandes 2. Beide Umlaufgeschwindigkeiten V2, V3 werden so aufeinander abgestimmt, daß die Konfektstücke 1 auf dem Zuteilband 3 lückenlos aneinanderliegen. Diese Lage wird auf dem Zuteilband 3 durch das Anlegen eines in Fig. 1 durch Pfeile repräsentierten Unterdruckes stabilisiert.

Vom Zuteilband 3 gelangen die Konfektstücke 1 auf Eingabeband 4. Die dem Zuteilband 3 und dem Eingabeband 4 zugeordneten Umlenkrollen 5, die sogenannten Messerkanten, haben den kleinsten konstruktiv möglichen Durchmesser, um die Umlenkrollen 5 von Zuteilband 3 und Stauband 2 so nahe als möglich benachbart anzuordnen und den Spalt zwischen beiden Förderern 3, 4 so gering als möglich zu halten.

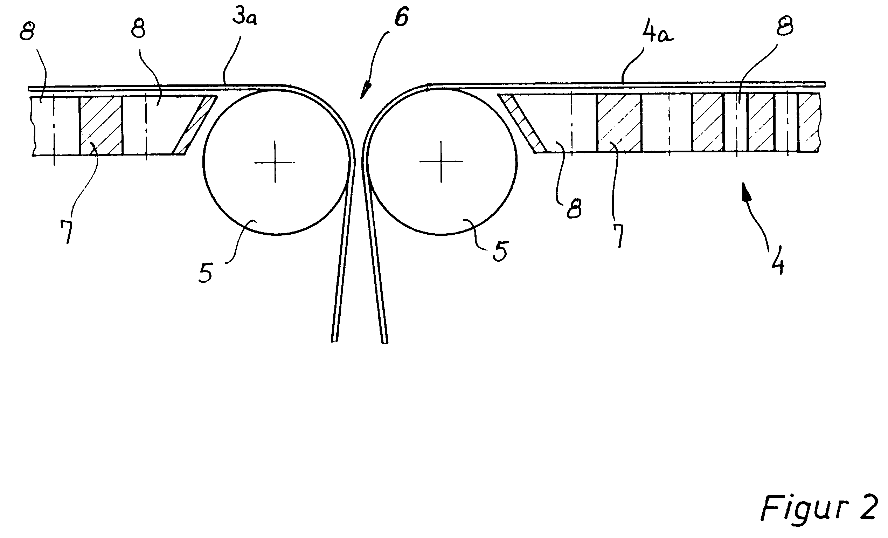

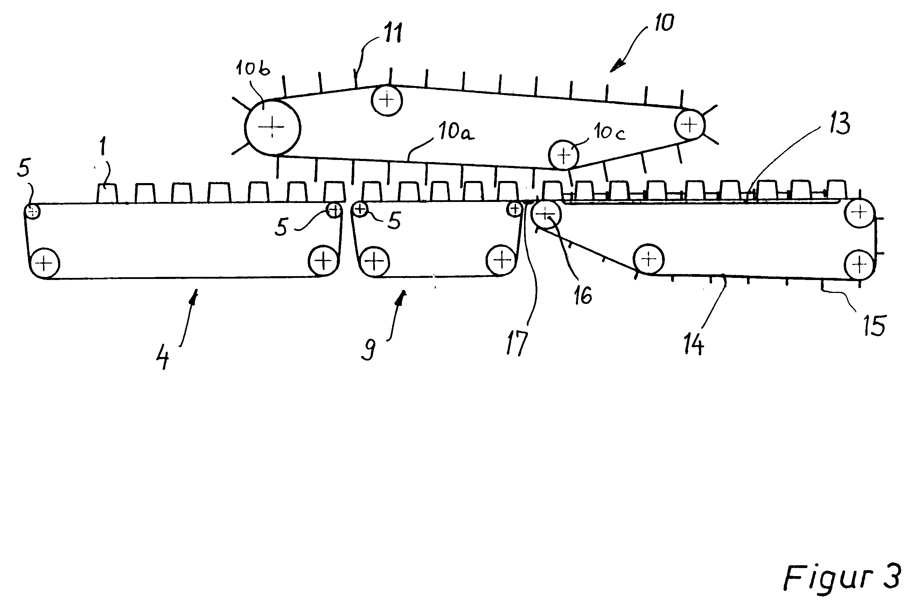

In dem vorliegenden Ausführungsbeispiel werden beispielsweise Umlenkrollen 5 mit einem Durchmesser von ca. 8 mm verwendet, wobei sich zwischen den Umlenkrollen 5 benachbarter Förderbänder, d.h. zwischen dem Stauband 2 und dem Zuteilband 3 bzw. zwischen dem Zuteilband 3 und dem Eingabeband 4 ein Abstand von ca. 10 mm ergibt. Dieser kann durch ein Konfektstück 1 überbrückt werden. D.h. die Basis eines Konfektstückes 1 in Förderrichtung ist größer als der Abstand benachbarter Förderbänder 2, 3, 4, so daß (geringfügig anders als in Fig. 1 dargestellt) die Konfektstücke 1 tatsächlich in einer ununterbrochenen Folge kontinuierlich auch über die Übergabestellen zwischen den Förderbändern 2, 3, 4 geführt werden und sich eine Hinterkante des Konfektstückes 1 beispielsweise noch auf im Bereich der Umlenkrolle 5 des Zuteilförderers 3 befindet, während eine Vorderkante des Konfektstückes 1 sich bereits im Bereich der Umlenkrolle 5 des Eingabeförderers 4 befindet (vgl. auch Fig. 2 und 3).

Auf diese Weise können die Konfektstücke 1 bei der Übergabe von dem Zuteilband 3 auf das Eingabeband 4 mit nur geringen Abweichungen von der Förderrichtung hinsichtlich ihrer Ausrichtung auf den Transportbändern über eine Übergabestelle 6 zwischen den Förderern 3, 4 geführt werden.

Die Umlaufgeschwindigkeit V4 des Eingabebandes 4 ist gegenüber der Umlaufgeschwindigkeit V3 des Zuteilbandes 3 etwa doppelt so hoch. Dadurch werden die Konfektstücke 1 an einer Übergabestelle 6 zwischen Zuteil- und Eingabeförderer 3, 4 nach der vorangegangenen Stauung wieder vereinzelt. Hierdurch soll eine definierte Lage zum Maschinentakt einer Verpackungsmaschine, an der die Zufühngseinrichtung angeordnet ist, erreicht werden. Infolge der wesentlichen Differenz zwischen den Umlaufgeschwindigkeiten V3, V4 und bedingt durch den unvermeidlichen Spalt an der Übergabestelle 6 zwischen dem Zuteilband 3 und dem Eingabeband 4, besteht die Gefahr, daß die Konfektstücke 1 einen mechanischen Impuls erhalten und so hinsichtlich des Maschinentaktes der anschließenden Verpackungsmaschine eine nicht-maschinentaktkonforme, abweichende Lage auf dem Eingabeband 4 einnehmen.

Aus diesem Grund wird zur Stabilisierung der Lage der Konfektstücke 1 auch auf dem Eingabeband 4 dieses mit Unterdruck beaufschlagt.

Der Aufbau des Eingabebandes 4 ist ähnlich demjenigen des Zuteilbandes 3. Im Gegensatz zu dem Unterdruck auf dem Zuteilband 3 ist der Unterdruck auf dem Eingabeband 4 jedoch über die Länge des Eingabebandes 4 hinsichtlich seiner Höhe abgestuft, wie dies in Fig. 1 durch Pfeile unterschiedlicher Länge angedeutet ist. Durch einen relativ hohen und insbesondere den Unterdruck am Ende des Zuteilbandes 3 übersteigenden Unterdruck am Beginn des Eingabeförderers 4, d.h. im Bereich der Übergabestelle 6, wird eine lagegenaue Übernahme der Konfektstücke 1 erreicht. Durch einen niedrigeren Unterdruck im mittleren Bereich des Eingabebandes 4 wird die Lage der Konfektstücke 1 stabilisiert. Am Ende des Eingabebandes 4 herrscht kein Unterdruck.

Die Übergabestelle 6 zwischen dem Zuteilband 3 und dem Eingabeband 4 ist im einzelnen schematisch und vergrößert in Fig. 2 dargestellt. Das obere Trum 3a des Zuteilbandes 3 bzw. das obere Trum 4a des Eingabebandes 4 sind jeweils über Platten 7 und zur Umlenkung über die Umlenkrollen 5 geführt, wobei beide Platten 7 ein zu der jeweiligen Umlenkrolle 5 hin abgeschrägtes Ende mit einer entsprechend vergrößerten Luftdurchtrittsöffnung 8 zur Luftführung durch das luftdurchlässige Zuteilband 3 bzw. Eingabeband 4 aufweisen. Hierdurch ist es möglich, die Luftdurchtrittsöffnungen 8 so nahe als möglich an die Übergabestelle 6 heranzuführen.

Durch die Verteilung und lichte Weite der Luftdurchtrittsöffnungen 7 wird auf Seiten des Eingabebandes 4 die gewünschte Druckverteilung und Abstufung des Unterdruckes erreicht. Wie aus Fig. 2 ersichtlich ist, nimmt in Transportrichtung des Eingabebandes 4 die lichte Weite der Durchtrittsöffnungen 8 ab und wird der Unterdruck durch entsprechende Beabstandung der Luftdurchtrittsöffnungen 8 in gewünschter Weise eingestellt. Sowohl das Zuteilband 3 als auch das Eingabeband 4 weisen hier nicht dargestellte, in regelmäßigen Abständen angeordnete Luftdurchtrittsöffnungen auf, die das Festhalten der Konfektstücke 1 durch an die Platten 7 angelegten Unterdruck ermöglichen.

Bedingt durch den verbliebenen Schlupf an dieser und an anderen Stellen sind bei der Übergabe der Konfektstücke 1 von dem Zuteilband 3 auf das Eingabeband 4 gegebenenfalls noch Lageabweichungen der Konfektstücke 1 von der angestrebten Sollage möglich. Daher werden die Konfektstücke 1 auf dem Eingabeband 4 zusätzlich hinsichtlich ihrer Istlage durch hier nicht dargestellte optische Mittel (Lichtschranke) in ihrer Lage erfaßt und die ermittelten Lage-Istwerte werden in üblicher Weise mit den Lage-Sollwerten verglichen. Ergibt der Soll-/Istwert-Vergleich, daß Konfektstücke 1 außerhalb des Toleranzbereiches liegen, werden diese durch eine hier nicht dargestellte Ausstoßervorrichtung, die stromauf eines nachfolgend noch genauer erläuterten Mitnehmerförderers 10 angeordnet ist, ausgestoßen. Bei Bedarf wird die Umlaufgeschwindigkeit des Zuteilbandes 3 durch den Servomotor M soweit verändert, bis die Konfektstücke 1 sich wieder im Toleranzbereich hinsichtlich ihrer Istlage auf dem Eingabeförderer 4 befinden. Dies spielt insbesondere eine Rolle im nichtstationären Betrieb der Zuführungseinrichtung, z.B. beim Anfahren der gesamten Anlage.

Innerhalb der gesamten, in Fig. 1 schematisch dargestellten Zuführungseinrichtung ist die Umlaufgeschwindigkeit V3 des Zuteilbandes 3 die einzige regelbare Umlaufgeschwindigkeit V in Verbindung mit der Vereinzelung der Konfektstücke 1.

Wie aus den Fig. 1 und 3 ersichtlich, ist in Förderrichtung im Anschluß an das Eingabeband 4 erfindungsgemäß ein Rückholband 9 angeordnet. Oberhalb dieses Rückholbandes 9 und partiell oberhalb des vorhergehenden Eingabebandes 4 befindet sich erfindungsgemäß ein oberer Mitnehmerförderer 10, der als oberer Mitnehmerzahnriemen ausgebildet ist.

Das Eingabeband 4 und das Rückholband 9 werden in herkömmlicher Weise über den in den Figuren schematisch dargestellten Umlenkrollenmechanismus mit den Umlenkrollen 5 geringen Durchmessers angetrieben. Auch hier werden rollende Messerkanten angewendet, um die Konfektstücke 1 bei der Übergabe vom Eingabeband 4 auf das Rückholband 9 bzw. von dem Rückholband 9 zu Führungsschienen 13 eines stromabseitigen Beschickungsförderers 12 mit nur geringen Abweichungen von der Förderrichtung über die Übergabestellen zu führen.

Wie in den Fig. 1 und 3 gezeigt, ist die Führung des oberen Mitnehmerzahnriemens 10 so ausgelegt, daß dessen Mitnehmer 11 auf einem Kreisbogen mit relativ kleinem Durchmesser in die Lücken zwischen die Konfektstücke 1 allmählich und mit fortschreitendem Eingriff gelangen und ebenfalls allmählich fortschreitend wieder oberhalb des Beschickungsförderers 12 aus diesen Zwischenräumen austreten. Hierzu wird ein unteres Trum 10a des Mitnehmerförderers 10 zunächst in Förderrichtung abwärts geneigt und sodann in Förderrichtung aufwärts geneigt geführt.

Zwischen den Umlenkrollen 10b und 10c kann das untere Trum 10a des Mitnehmerförderers 10 auch parallel zur Förderrichtung (parallel zum Eingabe- und Rückholförderer 4, 9) angeordnet sein. Hinsichtlich der Führung des unteren Trums 10a (und auch seines oberen Trums) ist der Mitnehmerförderer 10 einstellbar, so daß insbesondere die Einlaufneigung des Mitnehmerförderers 10 in Abhängigkeit von der Größe und Form der Konfektstücke 1 eingestellt werden kann.

Der obere Mitnehmerzahnriemen 10 überdeckt teilweise das Eingabeband 4, erstreckt sich über den Rückholförderer 9 und überdeckt teilweise die nachfolgenden Führungsschienen 13 des Beschickungsförderers 12, d.h. der Eingriff der Mitnehmer 11 in den Bereich zwischen die vereinzelten Konfektstücke 1 beginnt einige Takte vor der Übergabe vom Eingabeband 4 auf das Rückholband 9 und endet hinter dem Bereich der Übergabe von dem Rückholband 9 zu den Führungsschienen 13 des Beschickungsförderers 12.

Der Abstand der Mitnehmer 11 des Mitnehmerzahnriemens 10 ist konstruktiv bedingt und wird durch die Größe und die Beschaffenheit der zu verarbeitenden Konfekstücke 1 bestimmt. In dem vorliegenden Ausführungsbeispiel beträgt die lichte Weite zwischen den Mitnehmern 11 46 mm.

Der Toleranzbereich hinsichtlich der Lage der Stücke auf dem Eingabeband 4 ist so gewählt, daß die lichte Weite zwischen den Mitnehmern 11 des oberen Mitnehmerzahnriemens 10 ausreicht, um die Konfektstücke 1 sicher zwischen zwei Mitnehmern 11 des Mitnehmerzahnriemens 10 zu plazieren.

Die Mitnehmer 11 des Mitnehmerzahnriemens 10 greifen zunehmend in die Zwischenräume zwischen den Konfektstücken 1 am Ende des Eingabeförderes 4 und auf dem Rückholförderer 9 ein, d.h. die Konfektstücke 1 gelangen zunehmend zwischen je zwei Mitnehmer 11 des Mitnehmerzahnriemens. In dieser Lage werden die Konfektstücke 1 auf das Rückholband 9 gefördert. Die Umlaufgeschwindigkeit V9 des Rückholbandes 9 ist geringer als die Umlaufgeschwindigkeit V10 des oberen Mitnehmerzahnriemens 10. Beide Umlaufgeschwindigkeiten V9, V10 sind so aufeinander abgestimmt, daß eine relative Verschiebung der Konfektstücke 1 hinsichtlich ihrer Lage zwischen zwei Mitnehmern 11 stattfindet und am stromabseitigen Ende des Rückholbandes 9 im Bereich der Übergabe zu den Führungsschienen 13 des Beschickungsförderers 12 die Konfektstücke 1 mit dem oberen Bereich ihrer Rückseite jeweils an den Mitnehmern 11 des Mitnehmerförderers 10 anliegen.

Die Dauer dieses Verschiebungsvorganges der Position der Konfektstücke 1 zwischen den Mitnehmern 11, d.h. bis zum Anlegen der oberen Rückseite des Konfektstückes 1 an der Vorderseite eines Mitnehmers 11 des Mitnehmerförderers 10 auf dem Rückholförderer 9 wird konstruktiv nach den gegebenen Bedingungen festgelegt. Wichtige Kriterien sind dabei die Größe und Konsistenz der Konfektstücke 1 sowie die Verarbeitungsgeschwindigkeit. Ziel ist es, innerhalb möglichst weniger Maschinentakte diesen Vorgang abzuschließen und das Anlegen der Konfektstücke an den Mitnehmern des Mitnehmerförderers zu realisieren. In dem hier erläuterten Ausführungsbeipiel wird dieser Vorgang innerhalb von vier Maschinentakten abgeschlossen.

Den Führungsschienen 13 des Beschickungsförderers 12 ist ein unterer Mitnehmerzahnriemen 14 zugeordnet. Die Führungsschienen 13 des Beschickungsförderers 12 sind parallel beabstandet zueinander angeordnet und in den Freiraum zwischen die Mitnehmerschienen 13 greifen Mitnehmer 15 des Beschickungsförderers 12 ein und werden in diesem geführt. Als Werkstoff für die Führungsschienen 13 wird ein abriebfester und extrem gleitfähiger Kunststoff verwendet, der ein leichtes Gleiten der Konfektstücke, bewegt durch die Mitnehmer 15 des Beschickungsförderers 12, ermöglicht.

Eine dem unteren Mitnehmerzahnriemen 14 des Beschickungsförderers 12 zugeordnete Synchronscheibe 16 weist konstruktiv bedingt einen gegenüber den Umlenkrollen 5 wesentlich größeren Durchmesser auf. Um eine problemlose Übergabe der Konfekstücke 1 von dem Rückholförderer 9 zu dem Beschickungsförderer 12 sicherzustellen, ist eine Brücke 17 am Übergang vom Rückholband 9 zu den Führungsschienen 13 angeordnet. Die Brücke 17 weist mittig eine hier nicht dargestellte Aussparung auf, um den Durchgang der Mitnehmer 15 des Beschickungsförderers 12 zu gestatten.

Die Übergabe der Konfektstücke 1 von dem Rückholband 9 zu dem Beschickungsförderer 12 (unterer Mitnehmerzahnriemen 14) erfolgt über die Brücke 17. Die Konfektstücke 1 werden auf die Brücke 17 gefördert und durch die Aussparung in der Brücke 17 erfassen die Mitnehmer 15 des Beschickungsförderers 12 die Konfektstücke 1 und fördern diese entlang der Führungsschienen 13 des Beschickungsförderers 12 zu einer Aufnehmervorrichtung 18 der hier nicht weiter dargestellten Verpackungsmaschine.

Bei verhältnismäßig niedrigen Arbeitsgeschwindigkeiten der Verpackungsmaschine hat der Mitnehmerförderer 10 (oberer Mitnehmerzahnriemen) zusätzlich die Funktion, die Konfektstücke 1 über die Brücke 17 zu schieben und somit eine korrekte Übergabe an die Mitnehmer 15 des Beschickungsförderers 12 zu gewährleisten. Zum Zeitpunkt der Übergabe der Konfektstücke 1 von dem Rückholförderer 9 auf den Beschickungsförderer 12 befinden sich die Mitnehmer 15 des Beschickungsförderers 12 und die Mitnehmer des Mitnehmerförderers 10 in opponierend gegenüberliegender Stellung. Die Umlaufgeschwindigkeiten V10 des Mitnehmerförderers 10 (oberer Mitnehmerzahnriemen) und V12 des Beschickungsförderers 12 (unterer Mitnehmerzahnriemen) sind gleich und die exakte Lage der Konfektstücke 1 entsprechend dem Maschinentakt der Verpackungsmaschine ist damit erreicht.

Die Abschwenkbewegung der Mitnehmer 11 des Mitnehmerförderers 10 aus dem Eingriffsbereich zwischen benachbarten Konfektstücken 1 erfolgt allmählich aufwärts, so daß die Lage der Konfektstücke 1 im wesentlichen ungestört bleibt.

Die Konfektstücke 1 werden durch den Beschickungsförderer 12 bzw. durch dessen Mitnehmer 15 entlang der Führungsschienen 13 zu der Aufnehmervorrichtung 18 der Verpackungsmaschine zugeführt. Dabei überwinden auch einzelne Konfektstücke, die im Ausnahmefall noch nicht mit dem oberen Bereich ihrer Rückseite an einem Mitnehmer anliegen, infolge der Reibung entlang der Führungsschienen 13 einen eventuell noch bestehenden Spalt und gelangen in Anlage an dem betreffenden Mitnehmer 15 des Beschickungsförderers 12. Auch an der Übergabestelle zu der Aufnehmervorrichtung 18 der Verpackungsmaschine ist damit eine exakt definierte Lage der Konfektstücke 1 auch bei hoher Arbeitsgeschwindigkeit der Verpackungsmaschine gegeben.

## Patentansprüche

1. Verfahren zum Zuführen empfindlicher Gegenstände, insbesondere Süßwaren, zu einer Verarbeitungsmaschine, insbesondere Verpackungsmaschine, mit einer maschinenseitigen Aufnehmervorrichtung, der die Gegenstände in Übereinstimmung mit einem Maschinentakt der Verarbeitungsmaschine durch eine Mehrzahl abfolgender Förderer zugeführt werden, **dadurch gekennzeichnet**, daß die Gegenstände (1) stromauf eines mit der Aufnehmervorrichtung (18) zusammenwirkenden Beschickungsförderers (12) vereinzelt und unter Eingriff von Mitnehmern (11) eines Mitnehmerförderers (10) auf den Beschickungsförderer (12) aufgegeben werden.

2. Verfahren nach Anspruch 1, **dadurch gekennzeichnet**, daß die Geschwindigkeit der Mitnehmer (11) des Mitnehmerförderers (10) stromauf des Beschickungsförderers (12) größer ist als eine Fördergeschwindigkeit (V7) der vereinzelten Gegenstände (1).

3. Verfahren nach Anspruch 1 oder 2, **dadurch gekennzeichnet**, daß die Mitnehmer (11) von oben zwischen die vereinzelten Gegenstände (1) greifen und zumindest ein Teil der Gegenstände (1) mit einem hinteren oberen Endbereich gegen zugehörige Mitnehmer (11) des Mitnehmerförderers (10) anliegt.

4. Verfahren nach zumidnest einem der vorhergehenden Ansprüche 1 bis 3, **dadurch gekennzeichnet**, daß die Mitnehmer (11) des Mitnehmerförderers (10) an einem umlaufenden Fördermittel angeordnet sind, das in Förderrichtung und oberhalb eines Rückholbandes (9) entlang einer abwärts geneigten Ebene zum zunehmenden Eingriff der Mitnehmer (11) zwischen die vereinzelten Gegenstände (1) verläuft, und das umlaufende Fördermittel in Förderrichtung und oberhalb des sich stromab an den Rückholförderer (9) anschließenden Beschickungsförderers (12) entlang einer aufwärts geneigten Ebene verläuft, zum fortschreitenden Austritt der Mitnehmer (11) des Mitnehmerförderers (10) aus den Zwischenräumen zwischen den vereinzelten Gegenständen (1).

5. Verfahren nach zumindest einem der vorhergehenden Ansprüche 1 bis 4, **dadurch gekennzeichnet**, daß die Gegenstände (1) zunächst abfolgend lückenlos aneinanderliegend durch einen Stauförderer (2) und einen sich an diesen anschließenden Zuteilförderer (3) mit gegenüber dem Stauförderer (2) geringerer Umlaufgeschwindigkeit gestaut und anschließend durch Übergabe an einen mit gegenüber dem Zuteilförderer (3) mit höherer Umlaufgeschwindigkeit umlaufenden Eingabeförderer (4) vereinzelt und auf einen Rückholförderer (9) aufgegeben werden, werden, wobei die Umlaufgeschwindigkeit des Rückholförderers (9) geringer ist als diejenige des oberhalb des Rückholförderers (9) angeordneten Mitnehmerförderers (10) und daß am stromabseitigen Ende des Rückholförderers (9) die Gegenstände (1) rückseitig an den Mitnehmern (11) des Mitnehmerförderers (10) anliegen.

6. Verfahren nach zumindest einem der vorhergehenden Ansprüche 1 bis 5, **dadurch gekennzeichnet**, daß jeder Gegenstand (1), geführt von einem Mitnehmer (11) des Mitnehmerförderers (10), auf den sich an diesen anschließenden Beschickungsförderer (12) aufgegeben und, bewegt durch an einem umlaufenden Fördermittel (14) des Beschickungsförderers (12) fixierte Mitnehmer (15), entlang Führungsschienen (13) zu der Aufnehmervorrichtung (18) entsprechend dem Maschinentakt gefördert wird.

7. Verfahren nach zumindest einem der vorhergehenden Ansprüche 5 oder 6, **dadurch gekennzeichnet**, daß die Gegenstände (1) auf dem Zuteilförderer (3) und dem Eingabeförderer (4) zumindest im stromaufund stromabseitigen Übergabebereich des Eingabeförderers (4) durch einen Unterdruck auf dem Eingabeförderer (4) lagefixiert werden.

8. Verfahren nach Anspruch 7, **dadurch gekennzeichnet**, daß der Unterdruck entlang des Zuteilförderers (3) konstant ist, während der Unterdruck entlang des Eingabeförderers (4) nahe einer Übergabe von dem Zuteilförderer (3) auf den Eingabeförderer (4) am höchsten ist und zum stromabseitigen Ende des Eingabeförderers (4) bis zur Übergabe der Gegenstände auf dem Rückholförderer (9) auf Null abnimmt.

9. Verfahren nach zumindest einem der vorhergehenden Ansprüche 1 bis 8, **dadurch gekennzeichnet**, daß die Mitnehmer (11) des Mitnehmerförderers (10) im Endbereich des Eingabebandes (4) vor der Übergabe der Gegenstände (1) an den Rückholförderer (9) in die Zwischenräume zwischen die vereinzelten Gegenstände (1) eingreifen.

10. Einrichtung zum lagegenauen Zuführen empfindlicher Gegenstände, insbesondere Süßwaren, zu einer Verarbeitungsmaschine, insbesondere Verpackungsmaschine, entsprechend einem Maschinentakt der Verarbeitungsmaschine, mit zumindest einer, die Gegenstände einbahnig und vereinzelt fördernden Fördereinrichtung und einem stromab derselben angeordneten Beschickungsförderer, der ein Umlauffördermittel und an diesem fixierte Mitnehmer zur Beschickungsförderung der Gegenstände entlang Führungsschienen zu der Verarbeitungsmaschine aufweist, unter Anlage der Gegenstände an den Mitnehmern des Beschickungsförderers, **dadurch gekennzeichnet**, daß zumindest teilweise oberhalb der Fördereinrichtung (2, 3, 4, 9) ein Mitnehmerförderer (10) angeordnet ist, dessen Mitnehmer (11) zumindest im Bereich einer Übergabe von der Fördereinrichtung (2, 3, 4, 9) zu dem Beschickungsförderer (12) in Kontakt mit den Gegenständen (1) sind.

11. Einrichtung nach Anspruch 10, **gekennzeichnet**, daß der Mitnehmerförderer ein Mitnehmerzahnriemen (10) ist.

12. Einrichtung nach Anspruch 10 oder 11, **dadurch gekennzeichnet**, daß die Fördereinrichtung (2, 3, 4, 9) einen Rückholförderer (9) aufweist, der stromauf des Beschickungsförderers (12) angeordnet ist, und daß stromauf des Rückholförderers (9) ein eine Vereinzelung der Gegenstände (1) herbeiführender Eingabeförderer (4) angeordnet ist und der Mitnehmerförderer (10) sich zumindest von einem Endbereich des Eingabeförderers (4) über den Rückholförderer (9) bis zu einem stromaufseitigen Aufgabebereich des Beschickungsförderers (12) erstreckt.

13. Einrichtung nach zumindest einem der vorhergehenden Ansprüche 10 bis 12, **dadurch gekennzeichne**t, daß eine Umlaufgeschwindigkeit des Mitnehmerförderers (10) größer ist als eine Umlaufgeschwindigkeit des Rückholförderers (9).

14. Einrichtung nach zumindest einem der vorhergehenden Ansprüche 1 bis 13, **dadurch gekennzeichnet**, daß der Mitnehmerförderer (10) einen abwärts geneigten Abschnitt zum fortschreitenden Eingriff der Mitnehmer (11) des Mitnehmerförderers (10) in die Zwischenräume zwischen abfolgende, vereinzelte Gegenstände (1) auf dem Rückholförderer (9) aufweist, sowie einen sich in Förderrichtung hieran anschließenden, aufwärts geneigten Abschnitt zum fortschreitenden Austritt der Mitnehmer (11) des Mitnehmerförderers (10) aus den Zwischenräumen zwischen benachbarten Gegenständen (1).

15. Einrichtung nach zumindest einem der vorhergehenden Ansprüche 10 bis 14, **dadurch gekennzeichnet**, daß stromauf des Eingabeförderers (4) ein Stau- sowie ein Zuteilförderer (2, 3) abfolgend angeordnet sind.

16. Einrichtung nach zumindest einem der vorhergehenden Ansprüche 10 bis 15, **dadurch gekennzeichnet**, daß eine Umlaufgeschwindigkeit des Zuteilförderers (3) motorisch zur Steuerung der Vereinzelung der Gegenstände (1) in Übereinstimmung mit dem Maschinentakt der Verarbeitungsmaschine steuerbar ist.

17. Einrichtung nach zumindest einem der vorhergehenden Ansprüche 10 bis 16**, dadurch gekennzeichnet**, daß stromab des Eingabeförderers (4) der Rückholförderer (9) und der Beschickungsförderer (12) abfolgend angeordnet sind und der Zuteilförderer (3) mit einem gleichmäßigen Unterdruck und der Eingabeförderer (4) mit einem in Förderrichtung abnehmenden Unterdruck beaufschlagt sind.

18. Einrichtung nach zumindest einem der vorhergehenden Ansprüche 10 bis 17, **dadurch gekennzeichnet**, daß der Zuteilförderer (3) und der Eingabeförderer (4) über Umlenkrollen (5) geführte, luftdurchlässige Transportbänder aufweisen, deren oberes Trum (3a, 4a) über Platten (7) mit vertikalen Luftdurchtrittsöffnungen geführt sind, die entlang zumindest des Eingabeförderers (4) unterschiedlichen Strömungsguerschnitt aufweisen.
